# EUROPEAN PATENT APPLICATION

(11) **EP 2 461 550 A1**
(43) Date of publication of application: **06.06.2012**
(21) Application number: 10306332.7
(22) Date of filing: 01.12.2010
(51) Int. Cl.: H04M 1/57, H04M 3/42, H04W 4/16

(54) **Periodic notification of failed calls in a communication network**

(71) Applicant: Alcatel Lucent, 75007 Paris (FR)
(72) Inventor: Harish, Janardhan, 600032, CHENNAI (IN); Sony, Thomas, 600032, CHENNAI (IN)
(74) Representative: Sciaux, Edmond

(57) **Abstract**

The present subject matter discloses a method and a device for obtaining at least one user busy notification in response to at least one failed call between the called user and a caller in a communication network, storing failed call data associated with the failed call, and generating at least one failed call notification for the called user based at least, in part, on the failed call data.

## Description

### FIELD OF INVENTION

The present subject matter relates to communication networks and, particularly but not exclusively, to failed calls in the communication networks.

### BACKGROUND

Communication devices, such as cellular phones, personal digital assistants, portable computers, and desktop computers, provide users with a variety of mobile communications services and computer networking capabilities. These communications services allow data, for example, voice calls, to be exchanged between the users. However, in certain scenarios, the voice calls may fail at a user level. For example, if a caller is trying to call another user for immediate communication and the called user rejects the call, the caller is merely informed that the called user is busy or unavailable.

The rejection of an attempted communication can be frustrating in urgent situations. In such situations, callers often place repetitive calls to the user until the call is answered. As an alternative, the caller may choose to wait for a call from the called user. However, the called user may sometimes not return the call. Placing repetitive calls is inconvenient as it wastes the time of callers, who repeatedly re-key or re-dial a phone dialing sequence. In addition, wireless network resources, which repetitively route and process the voice calls until a call is answered, are also wasted. The resource consumption is particularly high for voice calls as voice calls generally receive high network priority.

### SUMMARY

This summary is provided to introduce concepts related to failed calls in a communication network. This summary is not intended to identify essential features of the claimed subject matter nor is it intended for use in determining or limiting the scope of the claimed subject matter.

In an embodiment, a method includes obtaining from a called user at least one user busy notification in response to at least one failed call. The user busy notification is generated in response to at least one failed call between the called user and the caller in a communication network. The method also includes storing failed call data associated with the failed call, and generating at least one failed call notification for a called user based at least, in part, on the failed call data. The method further includes generating subsequent reminders of the failed call notification based on whether or not an active call session is established between the called user and the caller. The periodicity of the reminders, in one implementation, may be configured by the called user.

In accordance with another embodiment of the present subject matter, a device for tracking failed calls and generating failed call notification is disclosed. The device includes a processor and a memory having a notification module. The notification module is configured to obtain at least one user busy notification. The user busy notification is indicative of a failed call between the caller and the called user. The notification module is further configured to extract failed call data pertaining to the failed call and generate at least one failed call notification for the called user based at least on the failed call data. The device is selected from at least one of a desktop computer, a mobile phone, a hand-held device, a portable computer, a mobile switching center, a soft switch, and a Public Switched Telephone Network (PSTN) switch.

In accordance with another embodiment of the present subject matter, a computer readable medium having a set of computer readable instructions that, when executed, perform acts including obtaining at least one user busy notification in response to at least one failed call between the called user and a caller in a communication network and generating at least one failed call notification based at least, in part, on failed call data associated with the failed call.

### BRIEF DESCRIPTION OF THE FIGURES

The detailed description is described with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:

Figure 1 schematically illustrates a system for tracking failed calls in a communication network, in accordance with an embodiment of the present subject matter;

Figure 2(a) illustrates a system for tracking failed calls in a Public Land Mobile Network (PLMN) environment, in accordance with an embodiment of the present subject matter;

Figure 2(b) is an exemplary call flow diagram indicating generation of failed call notifications for users in the communication network environment shown in Fig. 2(a);

Figure 3(a) illustrates a schematic representation of a system for tracking failed calls in an IP Multimedia Subsystem (IMS) network environment, in accordance with an embodiment of the present subject matter;

Figure 3(b) illustrates a call flow diagram indicating generation of failed call notifications for users in the communication network environment shown in Fig. 3(a), in accordance with an embodiment of the present subject matter; and

Figure 4 illustrates a method to track failed calls in a communication network and generating a failed call notification, in accordance with an embodiment of the present subject matter.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

Systems and methods for tracking failed calls in a communication network environment are described. The systems and methods can be implemented in a variety of communication devices. The communication devices that can implement the described method(s) include, but are not limited to, desktop computers, hand-held devices, laptops or other portable computers, mobile phones, landline phones, and the like. Additionally, the method can be implemented in any of the communication networks, such as Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), and IP-based network, Public Switched Telephone Network (PSTN), and Integrated Services Digital Network (ISDN). Although the description herein is with reference to certain networks, the systems and methods may be implemented in other networks and devices, albeit with a few variations, as will be understood by a person skilled in the art.

In one embodiment, the present subject matter discloses a method to track one or more failed calls and accordingly, notify the called user about the failed calls. In an example, a call initiated by the caller may fail if the called user rejects the call. When a call is rejected, the communication device of the called user generates a user busy notification, which is received by the communication network. The user busy notification is triggered by the communication device instead of the communication network. All such calls for which the user busy notification is generated are hereinafter referred to as failed calls. On receiving the user busy notification, the communication network obtains and stores failed call data associated with such failed calls. In one implementation, the failed call data includes information, for example, identity of the caller, the time of call, and the reason of call failure.

Once the failed called data is stored, the communication network may then generate at least one failed call notification based at least on the failed call data. The failed call notification may be in the form of a text message, voice message, or even automatic callback requests directed towards establishing an active call session between the called user and the caller. In an implementation, the called user is presented with the failed call notification at the lapse of a predetermined time interval, say two hours from the time when the call was rejected. In said implementation, the predetermined time interval may be set either at a user level or at a network level.

If, however, the called user fails to return the call after receiving the failed call notification, reminders of the failed call notification can then be generated and subsequently communicated to the called user either once or periodically. For example, the communication network may provide a reminder every two hours from the time when the called user rejected the call. In one implementation, the periodicity of the reminders may be set according to called user preferences. For instance, the called user may prefer to receive reminders of failed calls from only selected callers or at a certain time of the day. Accordingly, the communication network may initiate reminders of the failed call notification at a preferred time corresponding to the failed calls initiated by a set of callers selected by the called user.

Furthermore, the called user may also specify a termination time beyond which reminders are not generated. For example, the called user may define that the reminders be stopped after 16 hours from the time when the call failed. Additionally, the reminders may be communicated to the called user till the called user establishes an active call session with the caller or a default termination time, whichever is later. If the called user is successful in establishing an active call session with the caller within the termination time, further communication of the reminders of the failed call notification is terminated. In one implementation, the failed call data is erased from the data repository. The failed call data may also be erased when the reminders and failed call notification are permanently dismissed by the called user.

In this manner, the present subject matter provides an exemplary method and system to intimate a called user of failed calls. The called users are continuously reminded of received calls while the called user was busy, thereby making it easier for the called users to track the failed calls. Through the disclosed scheme, the air time and revenue, potentially lost as a result of failed calls, are recovered as more active calls are generated in the communication network and network resources are used more productively. Additionally, even though the conventional systems provide notifications when a called user is out of network, such conventional systems are not capable of tracking calls that fail at a user level. In some cases, the information pertaining to such calls is erased as soon as the user busy notification is received. However, the present subject matter enables tracking and further processing of such calls as well. Moreover, the called user has the flexibility to choose a list of callers from whom the called user prefers to receive failed call notification and reminders of the failed call notification.

It should be noted that the description and figures merely illustrate the principles of the present subject matter. It will thus be appreciated that those skilled in the art will be able to devise various arrangements that, although not explicitly described or shown herein, embody the principles of the present subject matter and are included within its spirit and scope. Furthermore, all examples recited herein are principally intended expressly to be only for pedagogical purposes to aid the reader in understanding the principles of the present subject matter and the concepts contributed by the inventor(s) to furthering the art, and are to be construed as being without limitation to such specifically recited examples and conditions. Moreover, all statements herein reciting principles, aspects, and embodiments of the present subject matter, as well as specific examples thereof, are intended to encompass equivalents thereof.

It will also be appreciated by those skilled in the art that the words during, while, and when as used herein are not exact terms that mean an action takes place instantly upon an initiating action but that there may be some small but reasonable delay, such as a propagation delay, between the initial action and the reaction that is initiated by the initial action. Additionally, the word "connected" is used throughout for clarity of the description and can include either a direct connection or an indirect connection.

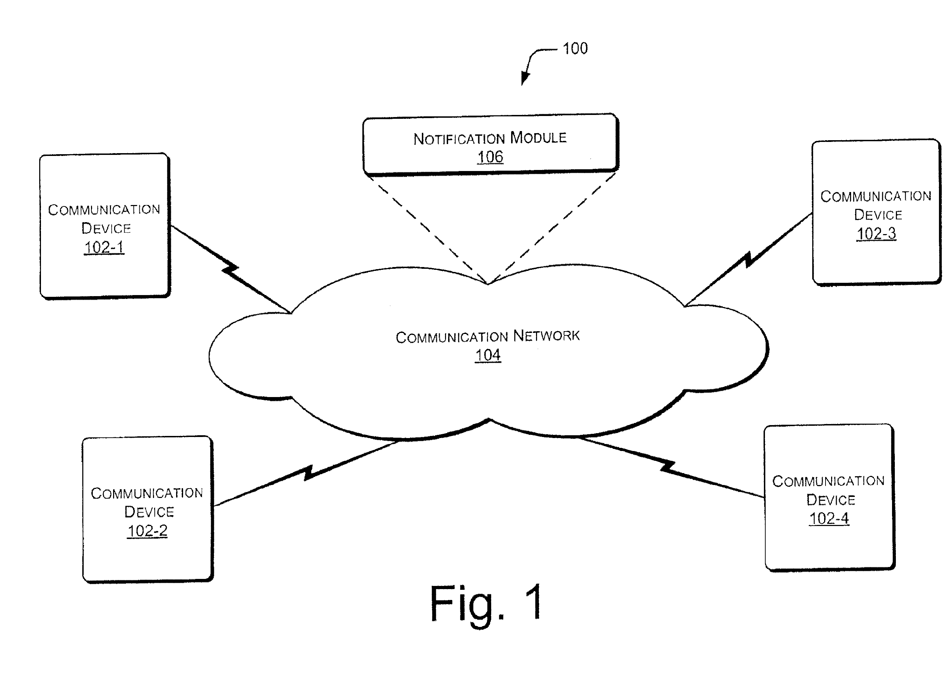

Figure 1 illustrates a system 100 for tracking failed calls initiated by a caller to a called user in a communication network environment. To this end, the system 100 includes one or more communication devices 102-1, 102-2, 102-3 and 102-4 (collectively referred to as communication devices 102) communicating with each other through a communication network 104. The communication devices 102 may include, without limitation, desktop computers, hand-held devices, laptops or other portable computers, network computers, mobile phones, landline phones, and the like. Each of the communication devices 102 works on a communication protocol as defined by the communication network 104 to which the communication device 102 is coupled.

The communication network 104 may be a wireless or a wired network, or a combination thereof. The communication network 104 can be a collection of individual networks, interconnected with each other and functioning as a single large network (e.g., the internet or an intranet). Examples of such individual networks include, but are not limited to, Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), IP-based network, Public Switched Telephone Network (PSTN), and Integrated Services Digital Network (ISDN). Depending on the technology, the communication network 104 includes various network entities, such as gateways, routers; however, such details have been omitted for ease of understanding.

In one implementation, the communication network 104 also includes a notification module 106 included within or associated with a network device (not shown in the figure). For example, in case of a PLMN, the notification module 106 is included within a mobile switching center (MSC). In another example, the notification module 106 may be included within a soft switch as in the case of an IP-based network. It will be appreciated by a person skilled in the art that the notification module 106 may be implemented as hardware or software or a combination thereof.

In operation, a user A of the communication device 102-1, also referred to as caller, interacts with a user B of the communication device 102-2, also referred to as called user, via the communication network 104. Irrespective of the type of communication protocol implemented by the communication network 104, the communication device 102-1 typically sends a request to the communication device 102-2 through the communication network 104 to establish a call session with the communication device 102-2. The communication between two parties would be apparent to a person skilled in the art and such details have been omitted for brevity.

Depending on the availability of the called user, the called user may reject the call initiated by a caller. As a result, the communication device 102-2 may return a user busy notification.. The user busy notification is triggered by the communication device 102 instead of the communication network 104. All such calls for which the user busy notification is generated are hereinafter referred to as failed calls.

In one implementation, the user busy notification generated, say by the communication device 102-2, is captured by the notification module 106. In response to the user busy notification, the notification module 106 extracts failed call data pertaining to the failed calls, for example, caller identity, time of call, and the reason of call failure. The failed call data, in one example, may be stored either within one of the already existing network entities or within a dedicated data repository (not shown in the figure).

The notification module 106, as per one implementation, generates a failed call notification based at least on the failed call data. The notification module 106 is further configured to send the failed call notification to the communication device 102-2 at the lapse of a predetermined time interval. The predetermined time interval may be defined either by the called user or by a network operator. Additionally, in one implementation, the called user initializes the predetermined time interval for the notification at run time based on the caller's identity. Further, in one embodiment, the notification module 106 generates failed call notification corresponding to one failed call. In another embodiment, the notification module 106 generates a failed call notification corresponding to a plurality of failed calls obtained during a time range when the called user was busy.

In one implementation, the failed call notification may be in the form of a text message, voice message, or even automatic callback request from the called user, given that the called user has subscribed for such a service. Therefore, the notification module 106 may utilize Short Message Service (SMS), which permits the sending of short messages between mobile phones, handheld devices, and even landline phones which are preconfigured for receiving SMS messages. Alternatively, the notification module 106 may utilize Unstructured Supplementary Services Data (USSD) for transmitting the failed call notification over a GSM network. In another example, the notification module 106 may send the failed call notification as Digital Subscriber System No. 1 (DSS1) Facility message over an ISDN. For analog users, the failed call notification may be communicated by sending a short ringing current followed by Frequency-Shift Keying (FSK) transmission of the caller. Optionally, the notification module 106 may transfer the failed call notification through electronic mail, Wireless Application Protocol (WAP) message, Multimedia Message Service (MMS) message, or any other method known in the art for transmitting information over the communication network 104. For Session Initiation Protocol (SIP) IMS users, the failed call notification may be communicated by sending SIP MESSAGE to the called user.

In one implementation, the notification module 106 may be further configured to generate further reminders of the failed call notification in case the failed call notification is unattended, snoozed or ignored by the called user. Such reminders can be communicated to the called user either once or periodically through the communication network 104. In one implementation, the called user or a network operator may set the periodicity of the reminders. For example, the communication network 104 may provide reminders every two hours from the time when the called user had rejected the call. Further, in one implementation, the notification module 106 may set the periodicity of the reminders according to called user preferences as the called user may prefer to receive reminders of failed calls from selected callers or only at a certain time of the day. Accordingly, the called user may define a set of callers whose call when missed, initiates reminders of the failed call notification and a preferred time for receiving such reminders. The called user may make such configurations while registering for such a service with the communication network 104. As an alternative, the called user may make such configurations in the communication device 102-2.

In another implementation, the notification module 106 may communicate the failed call notification and the reminders to the called user until the called user returns the call or the caller is able to get through to the called user. If the called user is successful in establishing an active call session with the caller within a predefined time period, further communication of the reminders of the failed call notification is terminated. Alternatively, the notification module 106 may continue to communicate the reminders until the lapse of a termination time specified by say, the called user. For example, the called user may define that the reminders be stopped after 16 hours from the time the call failed.

In one implementation, once the communication of the reminders has stopped, the notification module 106 may erase the failed call data, say from the data repository. The failed call data may also be erased when the failed call notification and the reminders are permanently dismissed by the called user, for example through a cancel/accept option provided along with the failed call notification.

It will be understood that even though the notification module 106 is shown to be within or associated with the communication network 104, the notification module 106 may also be implemented within each of the communication devices 102. In such an embodiment, the notification module 106 generates failed call notification and subsequent reminders of the failed call notification based on the call log stored in the memory of the communication device 102. Alternatively, only the users subscribing to such a service may be provided with communication devices 102 integrated with the notification module 106.

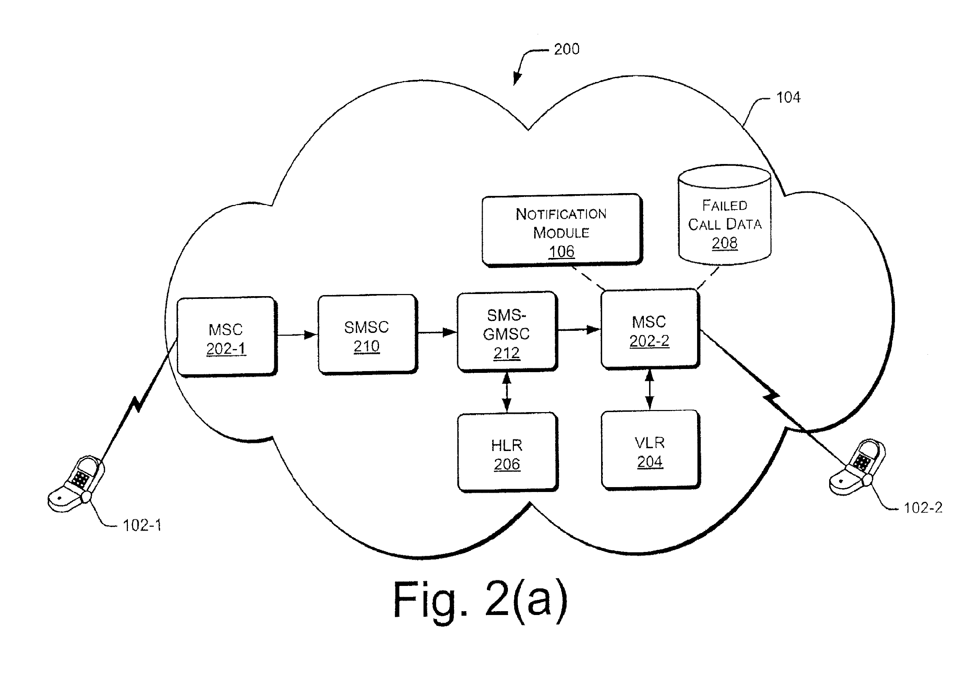

Figure 2(a) illustrates an exemplary system 200 for tracking failed calls initiated in a communication network environment by a caller to a called user. According to an embodiment of the present subject matter, the communication network 104 is a Public Land Mobile Network (PLMN) network.

As is well known, the PLMN network, such as a GSM network, includes a plurality of mobile stations, such as communication devices 102-1 and 102-2, for placing a call to either each other or to other such communication devices 102 associated with the communication network 104. The communication devices 102-1 and 102-2 are physical equipments used by the caller and the called user, respectively. More generally, the communication devices 102-1 and 102-2 are wireless communication devices having a dual mode interface, namely a Wireless Local Area Network (WLAN) interface and a Wide Area Network (WAN) interface. The WLAN interface provides connectivity to an Internet Protocol (IP) network. The WAN interface provides GSM support, CDMA support, and the like, depending on the underlying communication network and protocol. Each of the communication devices 102-1 and 102-2 includes a subscriber identity module (SIM), which is a smart card that carries, among other things, subscriber-specific information.

As is conventionally known, for communicating with each other, each of the communication devices 102-1 and 102-2 connects to its respective base transceiver stations (not shown in the figure), which provide radio coverage within a cell. Multiple base transceiver stations connect to a base station controller (not shown in the figure), which provides local switching to effect handover between the base stations. The base station controller is further connected to a mobile switching center (MSC), which is responsible for call handling of subscribers, i.e., the called user and the caller. For example, the communication device 102-1 is coupled to MSC 202-1 through its own base station controller and other network entities (not shown) to transfer data, such as voice calls and messages, to the called user. Similarly, the communication device 102-2 is coupled to the MSC 202-2 through its own base station controller and other network entities.

The MSC 202-1 and 202-2, as per one implementation, include processor(s) and a memory (not shown in the figure). The processor(s) can be a single processing unit or a number of units, all of which could include multiple computing units. The processor(s) may be implemented as one or more microprocessors, microcomputers, microcontrollers, digital signal processors, central processing units, state machines, logic circuitries, and/or any devices that manipulate signals based on operational instructions. Among other capabilities, the processor(s) are configured to fetch and execute computer-readable instructions stored in the memory. The memory may include any computer-readable medium known in the art including, for example, volatile memory such as SRAMs and DRAMs and/or non-volatile memory such as EPROMs and flash memories.

The communication network 104 further includes a visitor location register (VLR) 204, which stores on a temporary basis, data for handling calls set up or received by communication devices 102 registered with the VLR 204. It would be appreciated by a person skilled in the art that the MSC 202-2 and VLR 204 may be implemented as separate entities or can be implemented within a single unit. The communication network 104 also includes the home location register (HLR) 206, which stores information associated with each cellular service subscriber. The subscriber information may include an address of the MSC that covers the subscriber's home location and the address of the MSC where the subscriber is currently located or was last located.

In one implementation, the communication network 104 includes the notification module 106 included within the memory of a network device, for example, the MSC 202-2. The notification module 106 is configured to capture data pertaining to failed calls between the caller and the called user. Such data may relate to the calling parameters of the failed calls, such as time of failed call and caller identity. In said implementation, the notification module 106 stores such data in a data repository, such as the failed call data 208. Although the failed call data 208 is shown to be external to the MSC 202-2; however the failed call data 208 may also be integrated within the notification module 106 or the MSC 202-2.

The notification module 106, as per one implementation, generates at least one failed call notification and reminders of the failed call notification to intimate a called user of failed calls. The periodicity of such a notification and such reminders may be configured by the called user or the network operator.

For the purpose of short message transfer between communication devices 102-1 and 102-2, the communication network 104 also includes a short message service center (SMSC) 210 and a short message gateway mobile services switching center (SMS-GMSC) 212. It will be understood that entities similar to the SMSC 210, SMS-GMSC 212, VLR 204, and HLR 206 are connected to the MSC 202-1 and have been omitted for brevity. Additionally, the communication network 104 also includes other network entities that implement other functionalities as known in the art. Also, even though the description hereinafter is with reference to generating notifications in the form of short messages (SMS), the called user may optionally be notified using USSD messages, electronic mails, WAP messages, MMS messages, DSS 1 messages, or any other method for transmitting information over the communication network 104. Accordingly, network modifications may be made as will be understood by a person skilled in the art.

In operation, when the called user operating the communication device 102-2 rejects a call initiated by the caller operating the communication device 102-1, the communication device 102-2 generates and then communicates a user busy notification to the MSC 202-2. Subsequently, the notification module 106 captures data pertaining to the failed call that triggered the user busy notification. For example, the notification module 106 stores the caller identity, time of call, etc., in the failed call data 208 and generates a failed call notification.

In one implementation, the failed call notification is received by the SMS-GMSC 212 through the SMSC 210 in the form of an SMS message. The SMS-GMSC 212, in turn queries the HLR 206 for short message routing information. The HLR 206 returns the MSC address associated with destination communication device, communication device 102-2 in this case. Therefore, the HLR 206 returns the address of MSC 202-2 to the SMS-GMSC 212. The MSC 202-2 then requests the VLR 204 for subscriber-related information required to forward the failed call notification to the destination communication device 102-2.

If the VLR 204 determines that the called user is allowed to receive the failed call notification, the VLR 204 responds to the MSC 202-2 indicating the same. The MSC 202-2 then forwards the failed call notification to the communication device 102-2. In one implementation, the failed call notification may be stored in the memory of the communication device 102-2. As mentioned before, the notification module 106 may be configured to provide regular reminders of the pending failed call notification to the called user. In said implementation, the failed call data may be erased after an active call session is established between the called user and the caller or after the failed call notification is permanently dismissed by the called user.

It will be understood that even though the notification module 106 is shown to be within or associated with the MSC 202-2, the notification module 106 may also be integrated within the communication device 102-2. In such an embodiment, the notification module 106 generates failed call notification and subsequent reminders of the failed call notification based on the call log stored in the memory of the communication device 102-2.

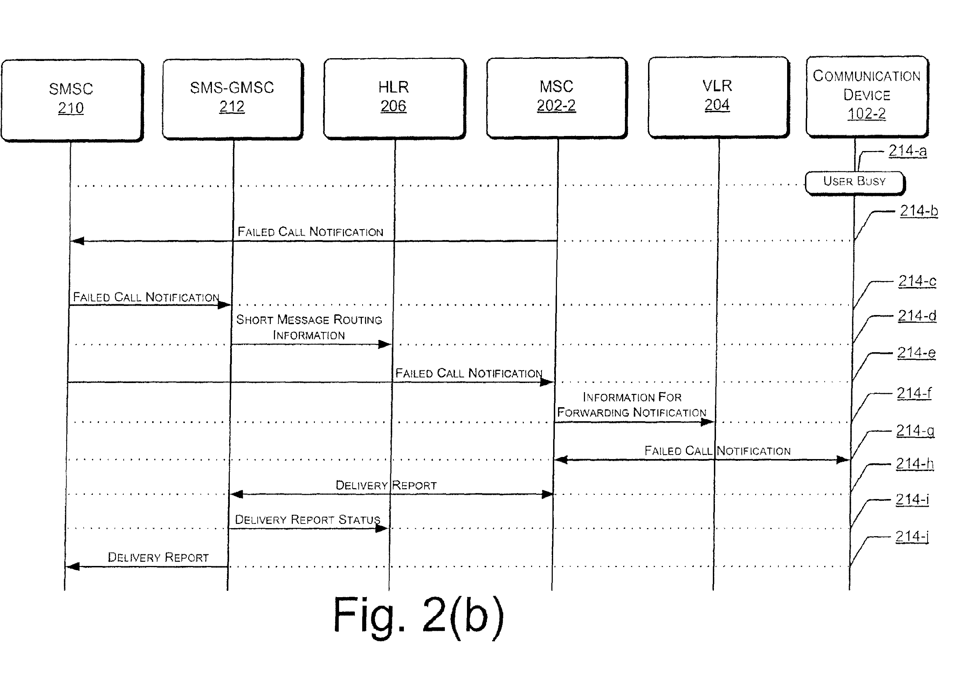

Figure 2(b) illustrates a call-flow diagram indicating generation of notifications for users in the system 200 shown in Fig. 2(a). The various arrow indicators used in the call-flow diagram depict the transfer of data between the communication device 102-1, the communication network 104, and the communication device 102-2.

When the called user rejects a caller's call, the communication device 102-2 of the called user, hereinafter interchangeably referred to as the destination communication device 102-2, returns a user busy notification to the caller (step 214-a). In one implementation, the MSC 202-2 captures the user busy notification and subsequently, the notification module 106 associated with the MSC 202-2 generates a failed call notification in response to the user busy notification. In one example, the failed call notification is a short message and includes information related to the call rejected by the called user, such as the time of failed call, identity of the caller obtained from the HLR 206 and VLR 204. Such data is temporarily available in the failed call data 208. Further, the MSC 202-2 forwards the failed call notification to the SMSC 210 (step 214-b).

Subsequently, the SMSC 210 transmits the failed call notification to the SMS-GMSC 212, to be delivered to the destination communication device 102-2 (step 214-c). In one implementation, the notification module 106 specifies the predetermined time interval after which the SMSC 210 transmits the failed call notification to the destination communication device 102-2. In another implementation, the failed call notification is sent to the SMSC 210 after the lapse of the predetermined time interval. On receiving such a failed call notification, the SMSC 210 immediately starts processing to send the failed call notification to the destination communication device 102-2. The SMS-GMSC 212 requests the HLR 206 of the called user for information on the serving mobile station. For this, short message routing information is sent to the HLR 206 (step 214-d). The HLR 206 provides information on the current MSC of the destination of the called user in its response to the SMS-GMSC 212 (step not shown). The SMS-GMSC 212 then forwards the failed call notification to the serving MSC 202-2 of the called user for delivery (step 214-e).

Next, the MSC 202-2 requests the VLR 204 for subscriber-related information required to forward the failed call notification to the destination communication device 102-2 (step 214-f). If the VLR 204 determines that the called user has subscribed to receive the failed call notification, the VLR 204 responds to the MSC 202-2 indicating the same. The MSC 202-2 then forwards the failed call notification to the destination communication device 102-2 (step 216-g). On successful receipt of the notification, the destination communication device 102-2 responds with an "acknowledgment" message to the MSC (included in step 214-g). The MSC 202-2 then forwards the delivery report of the failed call notification to the SMS-GMSC 212 (step 214-h). After receiving the delivery report status from the SMS-GMSC 212 at step 214-i, the delivery report is sent to the SMSC 210 at step 214-j_{.}

As mentioned before, besides failed call notification, the notification module 106 may also generate reminders of the failed call notification. Such reminders may also be sent to the communication device in the form of SMS messages. Additionally, the periodicity and timing of the failed call notification and reminders may be pre-set by the called user or a network operator based on the called user preferences, network bandwidth, level of urgency, etc.

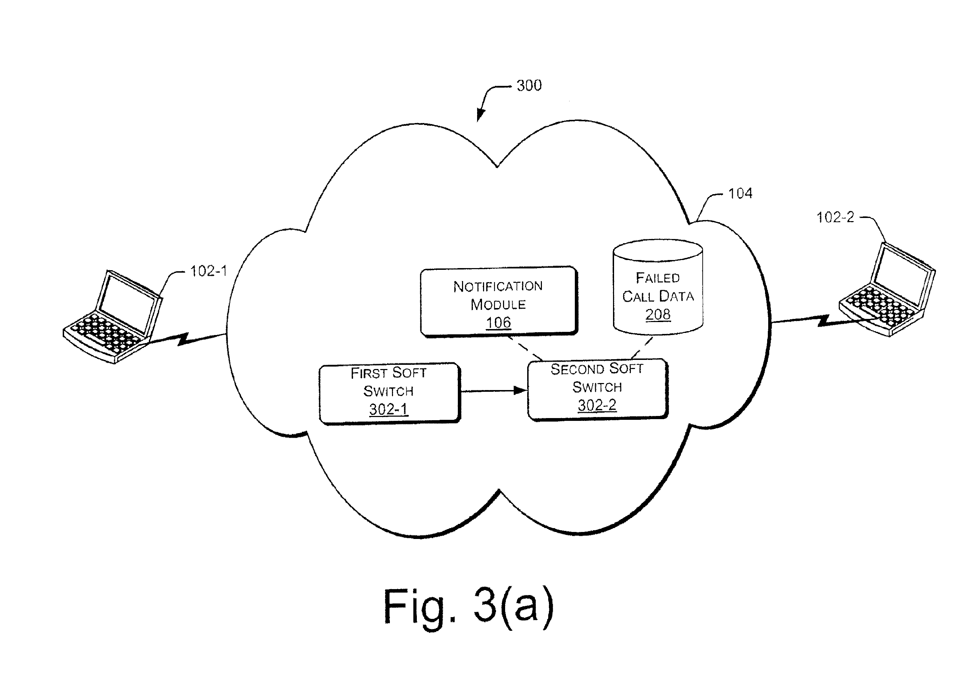

Figure 3(a) illustrates an exemplary system 300 for tracking failed calls initiated in a communication network environment, such as an IP Multimedia Subsystem (IMS) network environment. According to an embodiment of the present subject matter, the system 300 includes the communication device 102-1 and the communication device 102-2 communicating over a communication network 104, such as an IMS network, through a first soft switch 302-1 and a second soft switch 302-2. In general, multiple network entities, besides those shown, may lie between the communication devices 102, including gateways and routers, although those have been omitted for clarity. In one implementation, the system 300 also includes the notification module 106 and the failed call data 208, both associated with or included within the soft switch corresponding to the called user, for example the second soft switch 302-2.

In one implementation, the communication devices 102-1 and 102-2 are based on Session Initiation Protocol (SIP), for example, the communication devices 102-1 and 102-2 are SIP devices. As used herein, the term "SIP device" refers to any client (e.g., a personal computer or a web-appliance, outfitted with a microphone and speakers or headphones) that is configured to provide SIP phone functionalities. In general, SIP is a standard signaling protocol currently defined in IETF RFC 3261 that operates on the application layer of the Open Systems Interconnection (OSI) networking model. Although the description hereinafter may be described in terms of SIP, it will be appreciated that these concepts can be applied in any manner for establishing similar communication sessions known in the art.

Typically, in an IMS network, the caller and the called user are assigned one or more identities and security credentials. The identity typically has the form of a SIP URI, such as SIP: caller@xyz.com and SIP: calleduser@xyz.com. When the caller operating the communication device 102-1 attempts to call the called user operating the communication device 102-2, the caller first registers with the first soft switch 302-1. Then, the first soft switch 302-1 authenticates the caller's identity. Once authenticated, the communication device 102-1 may not know the location of the destination communication device 102-2 and therefore, sends the initial "INVITE" request to the second soft switch 302-2 through the first soft switch 302-1. The first soft switch 302-1 locates the second soft switch 302-2 associated with the communication device 102-2, and sends "INVITE" request to the associated second soft switch 302-2. The second soft switch 302-2 then establishes a call with the communication device 102-1 and returns a "200 OK" SIP message. However, in an event, when the called user is busy or has rejected the call, the communication device 102-2 returns a user busy notification, for example, a "486 Busy here" SIP message indicating that the called user is unavailable to take calls.

In one implementation, the notification module 106 captures such a user busy notification and generates a failed call notification in the form of a SIP MESSAGE. The body of the SIP MESSAGE includes one or more calling parameters associated with the failed calls. An example of the failed call notification is as follows:
User A ― sip:caller@xyz.com
User B ― sip:calleduser@xyz.com
MESSAGE sip:calleduser@xyz.com SIP/2.0
Via: SIP/2.0/TCP sip:pcscf1@xyz.com;branch=z3010dsrfd546gh Max-Forwards: 70
From: sip:App1Serv1@operator.com;tag=007
To: sip:calleduser@xyz.com.com
Call-ID: gfd23gdfv43@10.10.41.12
CSeq: 1 MESSAGE
Content-Type: text/xml
Content-Length: 180
<?xml version='1.0' encoding="utf-16"?>
<failed call notification>
<Calling User>sip:caller@xyz.com</Calling User>
<Time>15th Mar, 2010 18:35:17</Time>
<Failed Reason>Called user Busy</Reason>
</failed call notification>

As shown in the example above, the failed call notification may include details regarding the caller identity, the reason of call failure, etc. In such a manner, the notification module 106 sends the message to the communication device 102-2 after a predetermined time interval. Subsequent reminders may also be communicated to the called user, as mentioned before. This is further explained using call-flow diagram in the subsequent paragraphs.

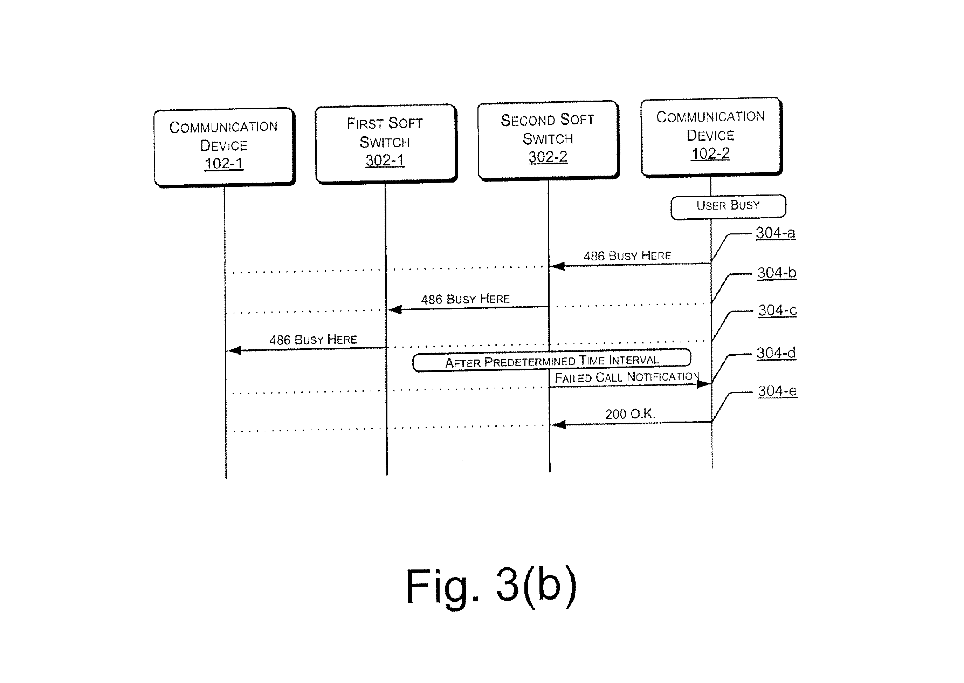

Figure 3(b) illustrates a call-flow diagram indicating generation of notifications for users in the system 300 shown in Fig. 3(a), in accordance with an embodiment of the present subject matter. The various arrow indicators used in the call-flow diagram depict the transfer of data between the communication device 102-1, the first soft switch 302-1, the second soft switch 302-2, and the communication device 102-2. As mentioned in Fig. 3(a), the communication devices 102-1 and 102-2 are connected via the first soft switch 302-1 and the second soft switch 302-2. In many cases, multiple network entities besides those shown may lie between the communication devices 102, including gateways and routers, although those have been omitted for clarity. Similarly, various SIP and network responses messages (e.g. acknowledgements) may also be omitted for clarity.

In an example, a user A of the communication device 102-1, also referred to as caller, attempts to call another user B of communication device 102-2, referred to as called user. To this end, according to the SIP protocol, the communication device 102-1 initiates a session by sending a message, such as "INVITE" message, to the communication device 102-2 through the first and second soft switches 302-1 and 302-2. There are a number of response messages that the communication device 102-1 may receive in response to the "INVITE" request. Initially, the communication device 102-1 may receive a "100" (Trying) message from the first soft switch 302-1. The communication device 102-1 may also receive messages, such as "180" (Ringing) message and subsequently, "200" (O.K.) message, from the communication device 102-2 if the session is successfully established between the communication device 102-1 and 102-2.

However, if the communication device 102-2 is able to receive an incoming connection, but the called user is unwilling or unable to take calls, the communication device 102-2 returns a user busy notification to the communication device 102-1. In one implementation, the user busy notification may be a "486" (Busy here) message or any such message triggered by the communication device 102-2. However, other messages may also be used, including "480" (Temporarily unavailable), "600" (Busy everywhere) and "603" (Decline) messages. For example, in an event when the called user rejects an incoming call, a user busy notification in the form of "486" (Busy here) is transferred from the communication device 102-2 to the communication device 102-1 (steps 304-a, 304-b, and 304-c). A standard SIP implementation may include the text "486 Busy here" in the start line of the response message. The "Busy here" part of this text is known as the reason phrase and "Busy here" is the reason phrase suggested by the SIP standard for status code "486". However, the SIP standard allows for placing any text in the reason phrase that follows the status codes.

For all such calls rejected by the called user or missed by the called user as he was busy or uninterested, also referred to as failed calls, the notification module 106 obtains and stores failed call data, such as the caller's identity, associated with the failed calls. Subsequently, the notification module 106 generates a failed call notification based at least on the failed call data after a predetermined time interval, say one hour from the time when the call was rejected, and transfers the failed call notification to the communication device 102-2 (step 304-d). The communication device 102-2 acknowledges receipt of such a failed call notification by a "200" (O.K.) message (step 304-e).

As stated earlier, on receiving the failed call notification from the notification module 106, the called user may choose to return the call from the communication device 102-2 or snooze the failed call notification. In one implementation, if the called user returns the call in a predefined time period, the failed call notification is dismissed and the failed call data associated with the failed call notification may be deleted. Alternatively, in case the failed call notification is snoozed, the second soft switch 302-2 may generate and communicate periodic reminders of the failed call notification to the communication device 102-2 until either a successful call session is established between the called user and the caller or the reminders are permanently dismissed. In another implementation, the termination time of the failed call notification and reminders may be pre-set by the called user as described earlier.

It will be understood that even though the notification module 106 is shown to be within or associated with the soft switch 302-2, the notification module 106 may also be integrated within the communication device 102-2. In such an embodiment, the notification module 106 locally generates failed call notification and subsequent reminders of the failed call notification based on the call log stored in the memory of the communication device 102-2.

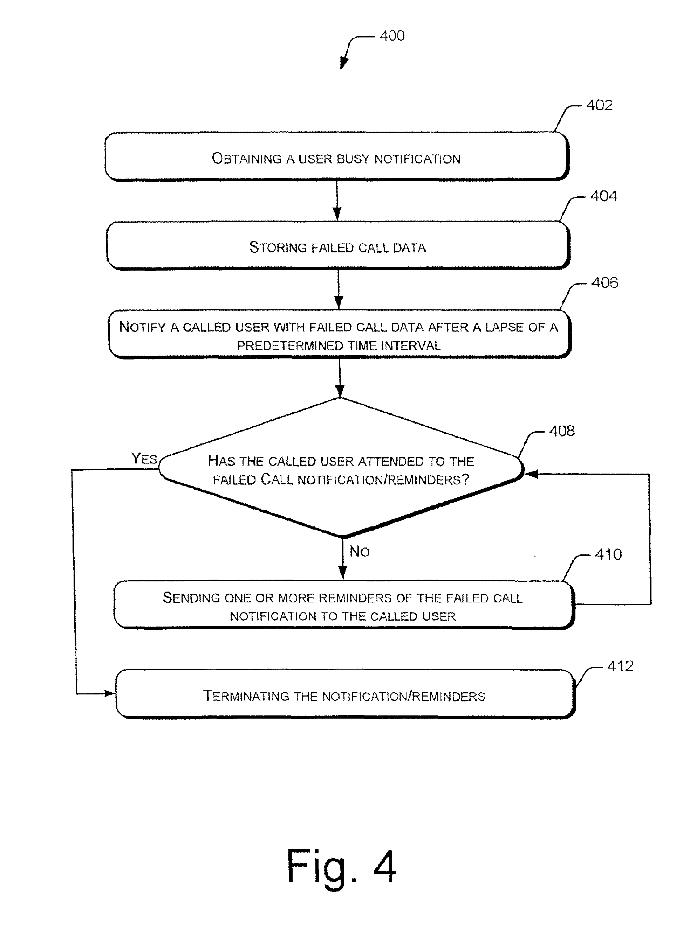

Figure 4 illustrates an exemplary method for tracking failed calls in a communication network and generating failed call notifications and reminders of failed calls for a called user. The order in which the method is described is not intended to be construed as a limitation, and any number of the described method blocks can be combined in any order to implement the method, or an alternative method. Additionally, individual blocks may be deleted from the method without departing from the spirit and scope of the subject matter described herein. Furthermore, the methods can be implemented in any suitable hardware, software, firmware, or combination thereof.

A person skilled in the art will readily recognize that steps of the method can be performed by programmed computers. Herein, some embodiments are also intended to cover program storage devices, for example, digital data storage media, which are machine or computer readable and encode machine-executable or computer-executable programs of instructions, wherein said instructions perform some or all of the steps of the described method. The program storage devices may be, for example, digital memories, magnetic storage media such as a magnetic disks and magnetic tapes, hard drives, or optically readable digital data storage media. The embodiments are also intended to cover both communication network and communication devices configured to perform said steps of the exemplary method.

At block 402, a user busy notification is obtained. For example, when a caller, say user A, calls another user, say user B and the latter rejects the call, a user busy notification is generated by the called user in response to at least one failed call between the called and the called user. Such a user busy notification is received by a communication network, as per one implementation. The user busy notification, in an example, indicates that the subscriber B is busy and therefore, does not wish to receive calls.

At block 404, failed call data associated with the failed calls is stored. In said embodiment, the failed call data includes information regarding the failed calls, for example, identity of the caller, the time of call, the reason of call failure, and caller profile. In one implementation, the failed call data associated with the failed calls may be extracted from a data repository within the communication network, such as communication network 104. Furthermore, once the failed call data is extracted, the failed call data may be stored either within the communication network or within the communication device of the called user. For example, in case of a GSM network, the failed call data may be saved within the MSC, such as 202-1, or within the memory of a mobile phone. Similarly, in case of an IP-based network, the failed call data may be saved within a soft switch, such as the second soft switch 302-2 or within the memory of a SIP device. Further, the failed call data is utilized to generate at least one failed call notification. The failed call notification may be in the form of a text or voice message. For example, the failed call notification may be in the form of an SMS message, a USSD message, a SIP message, an electronic mail, a Wireless Application Protocol (WAP) message, a Multimedia Message Service (MMS) message, a DSS1 message. In another implementation, the failed call notification may be configured to establish automatic call sessions between the caller and the called user.

At block 406, a called user is notified with the failed call data after a lapse of the predetermined time interval. For example, the failed call data encapsulated as failed call notification at block 406 is communicated to the called user at the lapse of the predetermined time interval. The failed call notification provides the called user with information regarding failed calls, which are otherwise lost by the communication network in conventional systems.

Further, the predetermined time interval may be initialized either by the called user or a network operator. The predetermined time interval may also be dependent on the called user preferences, such as identity of caller, time of day, etc. Additionally, in one implementation, the called user can choose to invoke the timer for the failed call notification at run time based on the caller's identity.

At block 408, it is determined whether or not the called user has attended to the failed call notification. On receiving the failed call notification, the called user may either choose to return the caller's call based on the information provided in the failed call notification or may simply ignore the failed call notification. If the called user returns the caller's call within a predefined time period and an active call session is established between the caller and the called user, the flow transitions to block 412 ("Yes" branch). However, if it determined that the called user has ignored the failed call notification ("No" branch), reminders of the failed call notification are communicated to the called user at block 410.

At block 410, reminders of the failed call notification are sent to the called user. The reminders can be communicated to the called user based on called user preferences. For example, the called user may define a set of callers whose call when missed, initiates reminders of the failed call notifications and a preferred time for receiving such notifications. In one implementation, such reminders may be presented in a periodic fashion to the called user. The periodicity of the reminders may also be user defined. Additionally, the reminders may be communicated to the called user until the called user returns the call. If the called user is successful in establishing an active call session with the caller within a predefined time period, further communication of the reminders of the failed call notification are terminated. Alternatively, the reminders may be communicated until the lapse of a termination time specified by say, the called user.

In this way, the called user receives reminders at user defined time intervals for calls, which were rejected by the called user and not attended to within the time when the called user rejected the calls and the expiry of the user defined time interval. Once the called user attends to the failed call notification either by dismissing the failed call notification or by establishing a successful call session with the caller whose calls were rejected, the failed call notification and the reminders are terminated at block 412. Alternatively, the failed call notification and the reminders may be terminated after a user-defined termination time. In one implementation, the failed call data is also erased. The failed call data may also be erased when the reminders and notifications are permanently dismissed by the called user.

Although implementations for tracking failed calls in a communication network have been described in language specific to structural features and/or methods, it is to be understood that the appended claims are not necessarily limited to the specific features or methods described. Rather, the specific features and methods are disclosed as exemplary implementations for tracking failed calls.

## Claims

1. A method comprising:
obtaining at least one user busy notification in response to at least one failed call between a called user and a caller in a communication network;
storing failed call data associated with the failed call; and
generating at least one failed call notification for the called user based at least, in part, on the failed call data.

2. The method as claimed in claim 1, wherein the failed call is a call rejected by the called user.

3. The method as claimed in claim 1 further comprising generating the failed call notification after a predetermined time interval, wherein the predetermined time interval is based at least, in part, on at least one called user preference.

4. The method as claimed in claim 1, wherein the storing further comprises extracting failed call data associated with the failed call.

5. The method as claimed in claim 1 further comprising:
determining whether an active call session is not established between the called user and the caller after the failed call notification is generated; and
if an active call session is not established between the caller and the called user, then generating at least one reminder of the failed call notification based at least, in part, on at least one called user preference.

6. The method as claimed in claim 1 further comprising communicating the reminder periodically, and wherein a periodicity of the reminder is defined by the called user.

7. The method as claimed in claim 1 further comprising:
receiving an indication of an active call session between the called user and the caller; and
terminating the failed call notification based on the received indication.

8. The method as claimed in claim 7, wherein the terminating is triggered after a termination time defined by the called user.

9. A device comprising:
a processor; and
a memory coupled to the processor, the memory comprises a notification module configured to,
obtain at least one user busy notification, wherein the user busy notification is indicative of a failed call between a caller and a called user;
extract failed call data pertaining to the failed call; and
generate at least one failed call notification based at least, in part, on the failed call data.

10. The device as claimed in claim 9, wherein the failed call is a call rejected by the called user.

11. The device as claimed in claim 9, wherein the notification module generates the failed call notification after a predetermined time interval.

12. The device as claimed in claim 9, wherein the notification module generates one or more periodic reminders of the failed call notification based on whether an active call session is established between the caller and the called user, and wherein the notification module receives a value of periodicity of the reminders from the called user.

13. The device as claimed in claim 9, wherein the notification module is configured to terminate at least one of the failed call notification and at least one reminder of the failed call notification after an active call session is established between the caller and the called user.

14. The device as claimed in claim 9, wherein the notification module is configured to erase the failed call data after an active call session is established between the caller and the called user, and wherein the failed call data comprises at least one of time of the failed call, identity of the caller, and reason of call failure.

15. The device as claimed in claim 9, wherein the device is selected from one of a desktop computer, a hand-held device, a portable computer, a mobile phone, a landline phone, a server, a mobile switching center, a soft switch, and a Public Switched Telephone Network (PSTN) switch.

16. The device as claimed in claim 9, wherein the notification module is associated with a communication network selected from at least one of a Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), IP Multimedia Subsystem (IMS) network , Public Switched Telephone Network (PSTN), and Integrated Services Digital Network (ISDN).

17. The device as claimed in claim 9, wherein the failed call notification is at least one of a Short Message Service (SMS) message, a Unstructured Supplementary Services Data (USSD) message, a Session Initiation Protocol (SIP) message, a Digital Subscriber System No. 1 (DSS1) message, an electronic mail, a Wireless Application Protocol (WAP) message, and a Multimedia Message Service (MMS) message.

18. A computer-readable medium having embodied thereon a computer program for executing a method comprising:
obtaining at least one user busy notification in response to at least one failed call between the called user and a caller in a communication network; and
generating at least one failed call notification based at least, in part, on failed call data associated with the failed call.

19. The computer-readable medium as claimed in claim 18, wherein the failed call data comprises data pertaining to at least one of time of the failed call, identity of a caller, and reason of call failure.

20. The computer-readable medium as claimed in claim 18 further comprising:
determining whether an active call session is not established between the called user and the caller after the failed call notification is generated; and
if an active call session is not established between the caller and the called user, then generating at least one reminder of the failed call notification based at least, in part, on at least one called user preference.

## Amended claims

### Amended claims in accordance with Rule 137(2) EPC.

**1.** A method comprising:
obtaining at least one user busy notification sent by a called communication device in response to at least one failed call between a called user and a caller in a communication network;
storing failed call data associated with the failed call; and
generating at least one failed call notification for the called user based at least, in part, on the failed call data.

**2.** The method as claimed in claim 1, wherein the failed call is a call rejected by the called user.

**3.** The method as claimed in claim 1 further comprising generating the failed call notification after a predetermined time interval, wherein the predetermined time interval is based at least, in part, on at least one called user preference.

**4.** The method as claimed in claim 1, wherein the storing further comprises extracting failed call data associated with the failed call.

**5.** The method as claimed in claim 1 further comprising:
determining whether an active call session is not established between the called user and the caller after the failed call notification is generated; and
if an active call session is not established between the caller and the called user, then generating at least one reminder of the failed call notification based at least, in part, on at least one called user preference.

**6.** The method as claimed in claim 1 further comprising communicating the reminder periodically, and wherein a periodicity of the reminder is defined by the called user.

**7.** The method as claimed in claim 1 further comprising:
receiving an indication of an active call session between the called user and the caller; and
terminating the failed call notification based on the received indication.

**8.** The method as claimed in claim 7, wherein the terminating is triggered after a termination time defined by the called user.

**9.** A device comprising:
a processor; and
a memory coupled to the processor, the memory comprises a notification module configured to,
obtain at least one user busy notification sent by a called communication device, wherein the user busy notification is indicative of a failed call between a caller and a called user;
extract failed call data pertaining to the failed call; and
generate at least one failed call notification based at least, in part, on the failed call data.

**10.** The device as claimed in claim 9, wherein the failed call is a call rejected by the called user.

**11.** The device as claimed in claim 9, wherein the notification module generates the failed call notification after a predetermined time interval.

**12.** The device as claimed in claim 9, wherein the notification module generates one or more periodic reminders of the failed call notification based on whether an active call session is established between the caller and the called user, and wherein the notification module receives a value of periodicity of the reminders from the called user.

**13.** The device as claimed in claim 9, wherein the notification module is configured to terminate at least one of the failed call notification and at least one reminder of the failed call notification after an active call session is established between the caller and the called user.

**14.** The device as claimed in claim 9, wherein the notification module is configured to erase the failed call data after an active call session is established between the caller and the called user, and wherein the failed call data comprises at least one of time of the failed call, identity of the caller, and reason of call failure.

**15.** The device as claimed in claim 9, wherein the device is selected from one of a desktop computer, a hand-held device, a portable computer, a mobile phone, a landline phone, a server, a mobile switching center, a soft switch, and a Public Switched Telephone Network (PSTN) switch.

**16.** The device as claimed in claim 9, wherein the notification module is associated with a communication network selected from at least one of a Global System for Mobile Communication (GSM) network, Universal Mobile Telecommunications System (UMTS) network, Personal Communications Service (PCS) network, Time Division Multiple Access (TDMA) network, Code Division Multiple Access (CDMA) network, Next Generation Network (NGN), IP Multimedia Subsystem (IMS) network , Public Switched Telephone Network (PSTN), and Integrated Services Digital Network (ISDN).

**17.** The device as claimed in claim 9, wherein the failed call notification is at least one of a Short Message Service (SMS) message, a Unstructured Supplementary Services Data (USSD) message, a Session Initiation Protocol (SIP) message, a Digital Subscriber System No. 1 (DSS1) message, an electronic mail, a Wireless Application Protocol (WAP) message, and a Multimedia Message Service (MMS) message.

**18.** A computer-readable medium having embodied thereon a computer program for executing a method comprising:
obtaining at least one user busy notification sent by a called communication device in response to at least one failed call between the called user and a caller in a communication network; and
generating at least one failed call notification based at least, in part, on failed call data associated with the failed call.

**19.** The computer-readable medium as claimed in claim 18, wherein the failed call data comprises data pertaining to at least one of time of the failed call, identity of a caller, and reason of call failure.

**20.** The computer-readable medium as claimed in claim 18 further comprising:
determining whether an active call session is not established between the called user and the caller after the failed call notification is generated; and
if an active call session is not established between the caller and the called user, then generating at least one reminder of the failed call notification based at least, in part, on at least one called user preference.
